Europäisches Patentamt

European Patent Office

Office européen des brevets

(19)

(11) Numéro de publication: **0 097 754**
**B1**

(12) **FASCICULE DE BREVET EUROPEEN**

(45) Date de publication du fascicule du brevet: 07.01.87

(51) Int. Cl.⁴: **H 04 Q 1/457**

(21) Numéro de dépôt: 82430017.2

(22) Date de dépôt: 25.06.82

(54) Détecteur de tonalité et récepteur multifréquences utilisant ledit détecteur.

(43) Date de publication de la demande:
11.01.84 Bulletin 84/02

(45) Mention de la délivrance du brevet:
07.01.87 Bulletin 87/02

(84) Etats contractants désignés:
AT BE CH DE FR GB IT LI SE

(56) Documents cités:
NACHRICHTENTECHNISCHE ZEITSCHRIFT,
vol. 7, 1972, pages 325-329, Berlin (DE); F.G.
BRAUN et al.: "Frequenzdetektion mit
dämpfungsfreien digitalen Resonatoren".
1972 INTERNATIONAL ZURICH SEMINAR ON
INTEGRATED SYSTEMS FOR SPEECH, VIDEO
AND DATA COMMUNICATIONS, 15-17 mars
1972, pages A3 (1)-A3 (13), Zürich (CH); F.
PELLANDINI: "Methodes et moyens pour
l'elaboration digitale de signaux analogiques".
INTERNATIONAL CONFERENCE ON
COMMUNICATIONS, Denver, Colorado, 14-18
juin 1981, Conference Record, vol. 1 of 4, pages
11.6.1 - 11.6.5, New York (USA); V.K. JAIN:
"Phase-assisted IPDFT digital DTMF receiver".
1981 IEEE INTERNATIONAL SYMPOSIUM ON
CIRCUITS AND SYSTEMS PROCEEDINGS,
Chicago Illinois, 27-29 avril 1981, vol. 1 of 3.

(73) Titulaire: **International Business Machines
Corporation
Old Orchard Road
Armonk, N.Y. 10504 (US)**
(84) BE CH DE GB IT LI SE AT

(73) Titulaire: **Compagnie IBM FRANCE
5 Place Vendôme
F-75000 Paris 1er (FR)**
(84) FR

(72) Inventeur: **Godard, Dominique
Chemin du Moulin OPIO
F-06650 Le Rouret (FR)**
Inventeur: **Morlec, Emile
353 Chemin Gardettes-Sire
F-06570 Saint Paul (FR)**

(74) Mandataire: **Tubiana, Max
Compagnie IBM France Département de
Propriété Industrielle
F-06610 La Gaude (FR)**

(56) References cited:
pages 50-53, New York (USA); V. CAPPELLINI
et al.: "CCD adaptive filtering techniques with
applications to communication systems".

Courier Press, Leamington Spa, England.

# 0 097 754

## Description

### Domaine technique

La présente invention concerne un récepteur de tonalité ainsi que les récepteurs de signaux dits multifréquences utilisant ledit récepteur.

### Etat de la technique

Les signaux que l'on se propose de détecter sont élaborés à partir d'au moins une fréquence choisie dans un ensemble fini de fréquences.

On se propose notamment de traiter des signaux, dits multifréquences qui sont habituellement composés d'un mélange de deux signaux de fréquences pures. Il peut s'agir notamment des signaux de numérotation d'un clavier téléphonique. Dans ce cas, l'enfoncement de l'une quelconque des touches du clavier provoque l'envoi vers le central téléphonique d'un signal multifréquences correspondant à la combinaison de deux fréquences choisies dans un lot de huit fréquences prédéterminées. L'identification de la touche enfoncée, donc la reconnaissance du numéro téléphonique demandé, est réalisée, au central, par un récepteur dit multifréquences (MFR), chargé de déceler la présence du signal multifréquences dans l'onde reçue et d'identifier les deux fréquences composant le signal multifréquences reçu.

En régle générale, les deux fréquences acouplées pour former un signal multifréquences appartiennent l'une à une bande dite basses fréquences (environ 700 à 1000 Hz par exemple), l'autre à une bande dite hautes fréquences (environ 1200 à 1700 Hz par exemple). Donc le récepteur MFR le plus simple pourrait comporter tout d'abord deux filtres, l'un passe-bas (LPF), l'autre passe-haut (HPF), tous deux coupant entre 1000 et 1200 Hz. Chacune des bandes ainsi obtenue serait elle-même découpée en quatre sous-bandes définies pour inclure chacune une seule des huit fréquences prédéterminées, citées plus haut. Le problème à résoudre est ainsi ramené à la détection de deux signaux de fréquences pures (tonalité), l'une située dans la bande basse (celle du filtre LPF), l'autre dans la bande haute (celle du filtre HPF). Le récepteur MFR est alors formé de deux récepteurs de tonalité semblables, chargés de détecter et d'identifier l'un une fréquence haute, l'autre une fréquence basse. On pourrait penser qu'il suffirait de mesurer l'énergie dans chacune desdites sous-bandes pour identifier dans chacune des bandes (la haute et la basse) la sous-bande véhiculant l'énergie la plus élevée.

Mais en procédant ainsi, sans précaution supplémentaire on obtiendrait un circuit particulièrement vulnérable aux fausses détections. Il ne saurait distinguer un vrai signal de numérotation d'un bruit ambiant quelconque notamment de parole.

Un perfectionnement a été proposé qui consiste à mettre un circuit limiteur à la sortie des filtres LPF et HPF. Un tel système a été décrit dans le Bell System Technical Journal (BST) de septembre 1981, Vol. 60, No. 7, pages 1574—1576. Le circuit limiteur à un double rôle. Un rôle de limiteur d'amplitude chargé de normaliser l'amplitude des signaux de sortie des filtres LPF et HPF; et un rôle tendant à favoriser les signaux de sous-bandes contenant une fréquence pure (cas des signaux à détecter par le MFR) par rapport à ceux qui contiendraient plusieurs fréquences (bruits). De plus, il faut noter qu'en pratique toutes les opérations du récepteur MFR sont réalisées en numériques. Pour cela avant d'être soumis aux filtres LPF et HPF, le signal est échantillonné à la fréquence de Nyquist de 8 KHz environ et codé en numérique à 12 ou 16 bits. Toutes le opérations de filtrage effectuées dans le MFR sont alors réalisées en numérique à l'aide de microprocesseurs. L'utilisation, à cet effet, de microprocesseurs conventionnels entraîne des bruits dits de calcul pouvant engendrer des perturbations dans le fonctionnement du récepteur MFR. En outre, la puissance de calcul requise pour le traitement de 8000 échantillons numériques par seconde est relativement importante, ce qui a un impact sur le coût des opérations.

Enfin, le document intitulé "Frenquenzdetektion mit dampfungsfreien digitalen Resonatoren" du "Nachrichtentechnischezeitschrift" Vol. 7, 1972, pages 325—329 traite de la détection d'une tonalité en passage par la conversion en coordonnées polaires du signal reçu exprimé numériquement, et en engendrant un effet de résonateur, ce qui peut requérir un traitement onéreux.

### Exposé de l'invention

La présente invention a donc pour objet un récepteur de tonalité(s) pure(s) relativement peu onéreux chargé de détecter la présence d'une tonalité appartenant à un groupe de tonalité de fréquences prédéterminées et à identifier ladite tonalité et un récepteur multifréquences utilisant ledit récepteur de tonalité(s) et assurant une bonne protection contre les fausses détections de signaux multifréquences.

Conformément à la présente invention, le récepteur de tonalité(s) pure(s) comprend:

des moyens d'échantillonnage et de conversion en numérique du signal reçu; un filtre passe bande relié au moyens d'échantillonnage et de conversion en numérique délivrant les composantes du signals reçu, en cordonnées cartésiennes; des moyens de conversions du signal des coordonnées cartésiennes en coordonnées polaires ($\rho$, $\theta$) ledit récepteur étant caractérisé en ce que ledit filtre passe bande a une bande passante englobant le spectre dudit groupe de fréquences; et en ce que les informations en coordonnées polaires sont soumises à des moyens logiques d'analyse des informations ($\rho$, $\theta$) aux fins d'identification de la fréquence reçue lorsqu'elle appartient audit groupe de fréquences prédéterminées.

Quant au récepteur multifréquences (MFR), il comprend:

· un premier récepteur de tonalités tel que défini ci-dessus, ayant une bande-passante couvrant une gamme dite de hautes-fréquences;

· un second récepteur de tonalités semblable audit premier récepteur de tonalité et ayant une bande-passante couvrant une gamme dite de basse-fréquences; et,

· des moyens d'analyse desdites variations de phases permettant de définir la valeur de la fréquence du signal reçu sur chacun desdits récepteurs et d'en déduire l'identification du signal multifréquences reçu par le récepteur MFR.

D'autres objets, caractéristiques et avantages de la présente invention ressortiront mieux de l'exposé qui suit, fait en référence aux dessins annexés à ce texte, qui représentent un mode de réalisation préféré de celle-ci.

Description des figures

Figure 1: schéma de principe d'un récepteur multifréquences selon l'invention.

Figure 2: mode de réalisation de circuits destinés au schéma de la figure 1.

Figure 3: organigramme de fonctionnement des circuits 18 et 20 de la figure 1.

Les signaux multifréquences utilisés en téléphonie pour les fonctions de numérotation et que l'on se propose de traiter ici, à titre d'exemple, sont composés de deux signaux de fréquences pures. L'un de ces signaux appartient à un groupe de fréquences dites basses et peut avoir l'une des quatre valeurs suivants: 697, 770, 852 et 941 Hz. L'autre appartient à un groupe de fréquences dites hautes et peut prendre l'une des valeurs suivantes: 1209, 1336, 1477 et 1633. Il existe seize combinaisons donc seize signaux multifréquences possibles dont le récepteur MFR doit pouvoir détecter la présence et qu'il doit pouvoir identifier en présence de bruits. Ces bruits peuvent notamment être constitués par la présence d'une tonalité de fréquence comprise entre 15 et 480 Hz, et de bruits divers tels qui de la musique ambiante. Il faut en outre éviter toute fausse détection de numérotation.

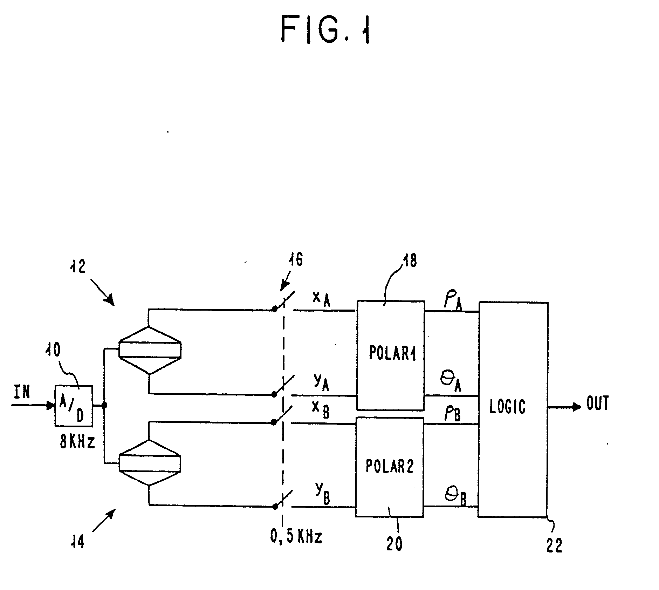

On a représenté sur la figure 1 le schméma de principe du récepteur multifréquences de l'invention. Le signal d'entrée est échantillonné à 8 KHz et converti en numérique dans un convertisseur analogique/ numérique 10. La sortie du convertisseur 10 est reliée simultanément à deux circuits de filtrage 12 et 14 du genre transformateur de Hilbert. Le filtre 12 passe une bande basses fréquences englobant le groupe de fréquences basses 697 à 941 Hz. L'autre filtre (14) a une bande passante hautes fréquences englobant le groupe de fréquences hautes, 1209 à 1477 Hz. Chacun des filtres 12 et 14 délivre un signal en coordonnées cartésiennes ayant deux composantes, l'une dite en phase ($x_A(t)$ ou $x_B(t)$) et l'autre dite en quadrature ($y_A(t)$ ou $y_B(t)$). Chaque couple (x, y) définit un signal dit analytique S tel que:

$$S_A(t) = x_A(t) + j \; y_A(t) \tag{1}$$

$$S_B(t) = x_B(t) + j \; y_B(t) \tag{2}$$

Grâce aux propriètés des signaux analytiques, le signal sortant de chaque filtre 12 et 14 peut être échantillonné à une fréquence égale ou supérieure à sa largeur de bande au lieu d'être échantillonné à deux fois sa fréquence supérieure, et ce, dans perturbations dues à l'échantillonnage. La fréquence d'échantillonnage au niveau de chaque filtre 12 et 14 peut donc être, dans le cas présent, ramenée sans inconvénient à 500 Hz, par une opération dite de décimation. C'est ce qui est symbolisé sur la figure 1 par des interrupteurs actionnés à une fréquence de 0,5 KHz. La puissance de calcul requise pour les traitements réalisés en aval desdits interrupteurs est donc ainsi rendue considérablement inférieure à ce qu'elle aurait été si la fréquence d'échantillonage du signal était restée à 8 KHz. Chacun des signaux analytiques $S_A(t)$ et $S_B(t)$ est traité dans un dispositif 18, 20 désigné par POLAR et convertissant les coordonnées cartésiennes (x, y) en coordonnées polaires ($\rho$, $\theta$) où $\rho$ désigne l'amplitude du signal traité et $\theta$ sa phase. Ces informations de phase et d'amplitude des signaux des bandes basses fréquences (à savoir $\rho_A$, $\theta_A$) et hautes fréquences ($\rho_B$, $\theta_B$), sont ensuite soumises à un circuit logique (22) où une analyse est effectuée pour détecter la présence d'un signal MFR et l'identifier. Cette identification est signalée sur la sortie OUT.

Les opérations de détection sont basées sur le fait que pour toute fréquence pure, l'amplitude $\rho$ et la variation de phase sont constantes, ou, en pratique, varient dans des limites prédéterminées.

En effet, si un signal analytique est de fréquence pure $f_o$ on peur écrire:

$$x(t) = \rho \cos (2\pi f_o t + \phi) \tag{3}$$

$$y(t) = \rho \sin (2\pi f_o t + \phi) \tag{4}$$

$$S(t) = \rho \exp j \; \theta(t)$$
avec $\theta(t) = 2\pi f_o t + \phi$

L'amplitude $\rho$ est constante et la phase $\theta(t)$ est linéaire.
Donc entre deux instants t et t+$\tau$ la variation de phase est

$$\Delta\theta(\tau) = 2\pi f_o \tau \tag{5}$$

3

Le dispositif logique 22 reçoit toutes les 2 millisecondes, des informations $\rho$ et $\theta$. On parle alors de phases instantanées. Il est donc facile de vérifier si $\rho$ reste sensiblement constante et si la variation de $\theta$ reste aussi sensiblement constante entre deux instants d'échantillonnages consécutifs. En outre, connaissant $\tau$, la mesure de $\Delta\theta(\tau)$ permet de calculer $f_0$. Le système permet donc de déceler la réception d'un signal de fréquence pure, donc de tonalité pure, et d'identifier cette fréquence.

En pratique, les bruits perturbent les mesures. On admettra que l'opération de détection de tonalité est effectuée lorsque les variations de $\rho$ et $\Delta\theta$ mesurées sur un intervalle de temps couvrant un nombre donné d'échantillons restent dans des limites prédéterminées.

Le système de la figure 1 se présente donc comme un récepteur MFR formé de deux récepteurs de tonalités, chargés de recevoir chacun quatre tonalités pures, et de moyens d'analyse permettant d'identifier les tonalités reçues et d'en déduire l'identification du signal multifréquences reçu par le récepteur MFR.

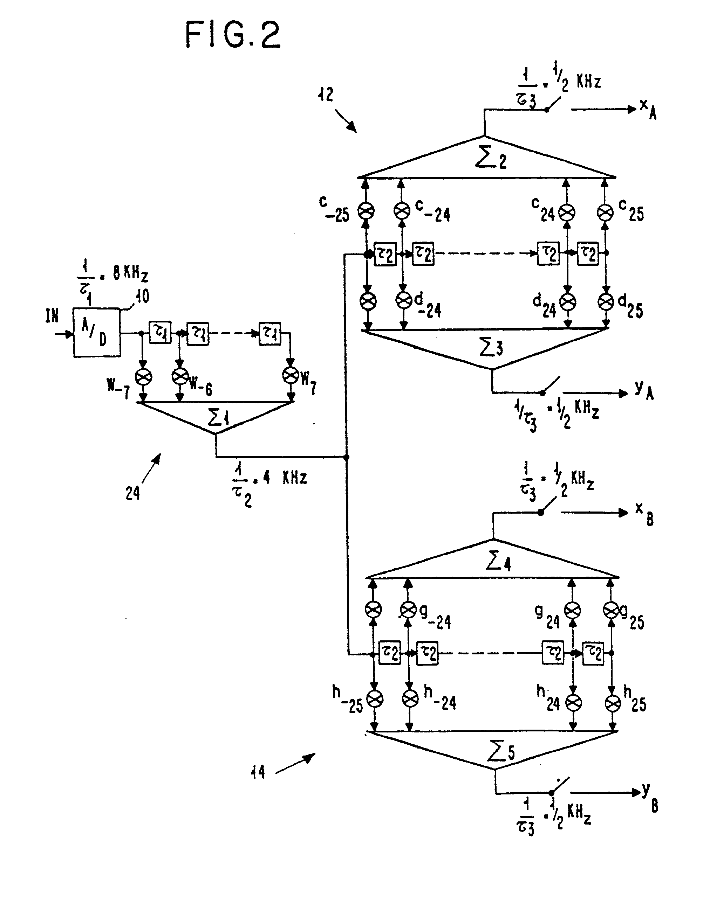

La figure 2 représente un mode de réalisation de l'ensemble de filtrage séparateur des bandes hautes et basses fréquences. Autrement dit, les éléments de la figure 1 en amont des dispositifs 18 et 20, avec en outre un filtre passe bas (LP) portant la référence 24 et chargé d'éliminer les signaux hors de la bande de 0 à 2 KHz.

Les échantillons de signal sortant du convertisseur 10 à une cadence de 8000 échantillons par seconde

$$\tau1=\frac{1}{8000}=125\ \mu s$$

sont introduits dans le filtre passe-bas 24. Ce filtre est de type transversal et a quinze coefficients désignés par $w_{-7}, w_{-6}, ..., w_0, w_1, ..., w_7$. Ces coefficients, codés sur 12 bits, ont été choisis tels que $w_{-n}=w_n$, avec:

$$w_0 = 1045$$
$$w_1 = 644$$
$$w_2 = -14$$
$$w_3 = -206$$
$$w_4 = 6$$
$$w_5 = 140$$
$$w_6 = -46$$
$$w_7 = -63$$

l'élément neutre de la multiplication étant égal à la valeur décimale 2048.

Le signal sortant du filtre passe-bas 24 est rééchantillonné à la fréquence $1/\tau2=4$ KHz avant d'être soumis aux filtres 12 et 14 du type transformateurs de Hilbert. Les filtres 12 et 14 sont des filtres passe-bande respectivement chargés de fournir les composantes en phase et en quadrature des signaux des groupes de fréquences dites basses (627; 770; 852 et 941 Hz) et hautes (1209; 1336; 1477 et 1633) respectivement. Ils sont formés chacun de deux filtres numériques, l'un dit en phase, l'autre dit en quadrature, utilisant la même ligne à retard. Les coefficients des filtres 12 et 14, codés comme précédemment sur 12 bits, ont les valeurs indiquées sur les tableaux I et II, respectivement.

4

## TABLEAU I

| Filtre en phase | | | Filtre en quadrature | | |
|---|---|---|---|---|---|
| $c_{-n}=c_n$, n=0, ..., 25 | | | $d_{-n}=-d_n$, n=0, ..., 25 | | |
| $c_0$ | = | 473 | $d_0$ | = | 0 |
| $c_1$ | = | 118 | $d_1$ | = | 447 |
| $c_2$ | = | −375 | $d_2$ | = | 211 |
| $c_3$ | = | −262 | $d_3$ | = | −273 |
| $c_4$ | = | 163 | $d_4$ | = | −266 |
| $c_5$ | = | 229 | $d_5$ | = | 69 |
| $c_6$ | = | − 6 | $d_6$ | = | 165 |
| $c_7$ | = | − 93 | $d_7$ | = | 20 |
| $c_8$ | = | − 14 | $d_8$ | = | − 31 |
| $c_9$ | = | − 11 | $d_9$ | = | 11 |
| $c_{10}$ | = | − 41 | $d_{10}$ | = | − 27 |
| $c_{11}$ | = | 22 | $d_{11}$ | = | − 63 |
| $c_{12}$ | = | 72 | $d_{12}$ | = | 6 |
| $c_{13}$ | = | 13 | $d_{13}$ | = | 67 |
| $c_{14}$ | = | − 52 | $d_{14}$ | = | 23 |
| $c_{15}$ | = | − 23 | $d_{15}$ | = | − 32 |
| $c_{16}$ | = | 13 | $d_{16}$ | = | − 14 |
| $c_{17}$ | = | 4 | $d_{17}$ | = | 1 |
| $c_{18}$ | = | 1 | $d_{18}$ | = | − 5 |
| $c_{19}$ | = | 13 | $d_{19}$ | = | − 4 |
| $c_{20}$ | = | 9 | $d_{20}$ | = | 19 |
| $c_{21}$ | = | − 19 | $d_{21}$ | = | 10 |
| $c_{22}$ | = | − 9 | $d_{22}$ | = | − 12 |
| $c_{23}$ | = | 4 | $d_{23}$ | = | − 10 |
| $c_{24}$ | = | 11 | $d_{24}$ | = | 2 |
| $c_{25}$ | = | − 3 | $d_{25}$ | = | 6 |

## TABLEAU II

| Filtre en phase | | | Filtre en quadrature | | |
|---|---|---|---|---|---|
| $g_{-n}=g_n$, n=0, ..., 25 | | | $h_{-n}=-h_n$, n=0, ..., 25 | | |
| $g_0$ | = | 724 | $h_0$ | = | 0 |
| $g_1$ | = | −429 | $h_1$ | = | 535 |
| $g_2$ | = | −126 | $h_2$ | = | −566 |
| $g_3$ | = | 381 | $h_3$ | = | 188 |
| $g_4$ | = | −228 | $h_4$ | = | 106 |
| $g_5$ | = | 22 | $h_5$ | = | − 86 |
| $g_6$ | = | − 25 | $h_6$ | = | − 29 |
| $g_7$ | = | 115 | $h_7$ | = | 1 |
| $g_8$ | = | − 89 | $h_8$ | = | 107 |
| $g_9$ | = | − 21 | $h_9$ | = | −117 |
| $g_{10}$ | = | 61 | $h_{10}$ | = | 36 |
| $g_{11}$ | = | − 14 | $h_{11}$ | = | 2 |
| $g_{12}$ | = | − 7 | $h_{12}$ | = | 33 |
| $g_{13}$ | = | − 34 | $h_{13}$ | = | − 50 |
| $g_{14}$ | = | 62 | $h_{14}$ | = | 9 |
| $g_{15}$ | = | − 35 | $h_{15}$ | = | 29 |
| $g_{16}$ | = | 2 | $h_{16}$ | = | − 19 |
| $g_{17}$ | = | − 6 | $h_{17}$ | = | − 3 |
| $g_{18}$ | = | 23 | $h_{18}$ | = | − 4 |
| $g_{19}$ | = | − 16 | $h_{19}$ | = | 23 |
| $g_{20}$ | = | − 4 | $h_{20}$ | = | − 22 |
| $g_{21}$ | = | 9 | $h_{21}$ | = | 5 |
| $g_{22}$ | = | 1 | $h_{22}$ | = | 1 |
| $g_{23}$ | = | − 6 | $h_{23}$ | = | 5 |
| $g_{24}$ | = | 0 | $h_{24}$ | = | − 10 |
| $g_{25}$ | = | 4 | $h_{25}$ | = | 4 |

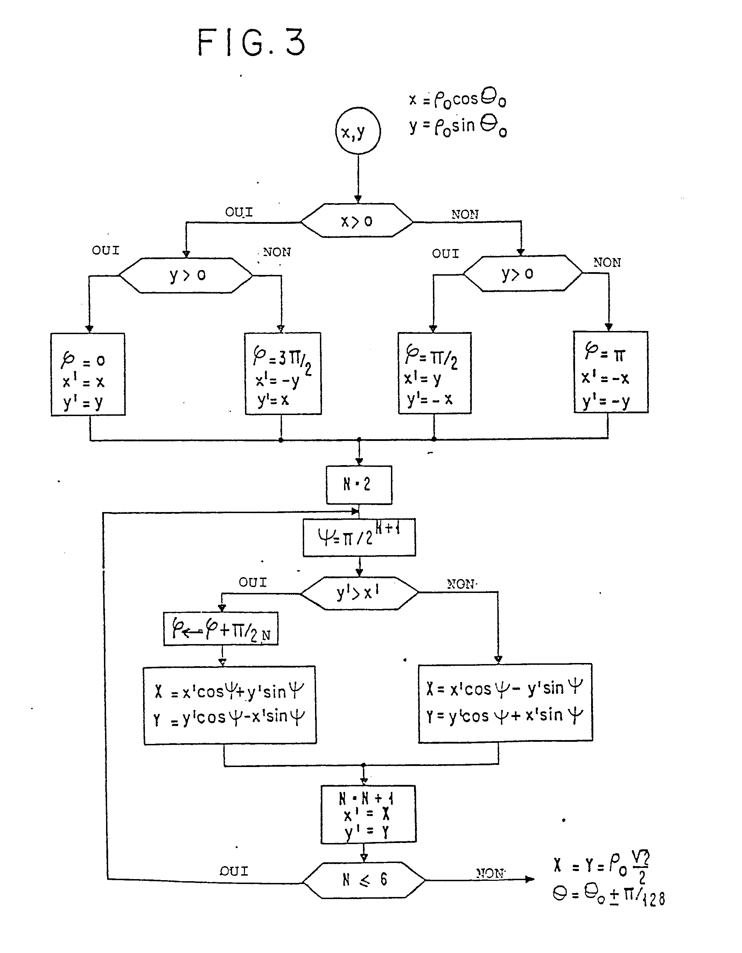

Toutes les 2ms on dispose à la sortie des filtres 12 et 14 de composantes (x, y). La conversion en coordonnées polaires $(\rho, \theta)$ est réalisée en 18 et 20 par application d'une méthode de dichotomie résumée sur la figure 3.

En effet, on peut écrire:

$$\left\{ \begin{array}{ll} x=\rho_o \cos \theta_o & (6) \\ y=\rho_o \sin \theta_o & (7) \end{array} \right.$$

Le rôle des circuits 18, 20 de conversion en polaire est de déterminer $\rho_o$ et $\theta_o$. Pour ce faire, les composantes (x, y) de chaque échantillon sont soumises aux opérations de dichotomie de la figure 3.

Les opérations schématisées dans la partie supérieure de la figure 3 ont pour but de faire tourner (première rotation) le vecteur correspondant à l'échantillon de composantes (x, y) pour l'amener dans le premier quadrant du cercle trigonométrique tout en notant l'amplitude de la rotation effectuée. Après avoir ramené le vecteur dans le premier quadrant, on lui fait subir des rotations (deuxième rotation) successives de $\pi/8$, $\pi/16$, $\pi/32$, $\pi/64$, $\pi/128$ de manière à le faire converger dans la position du vecteur $\pi/4$ du cercle trigonomètrique. Ces opérations sont indiquées dans la partie inférieure de la figure 3. A la fin de ces opérations, on possède des valeurs x', y' et $\phi$. x' et y' sont les coordonnées du vecteur sensiblement ramené à la position $\pi/4$ du cercle trigonométrique. Donc $x' \approx y'$. Quant à la valeur de $\phi$ elle est liée aux rotations successives effectuées sur le vecteur (x, y) d'origine. Elle traduit la valeur de la phase dudit vecteur (x, y) à $\pi/128$ près.

D'où

$$\rho_o = X\sqrt{2} \text{ et } \theta_o = \phi \pm \pi/128 \qquad (8)$$

Les mesures de $\rho_o$ et $\theta_o$ peuvent être rendues plus précises si, au lieu d'arrêter les rotations à $NT=7$, on les poursuivait.

On a vu plus haut qu'on pouvait considérer qu'un signal multifréquence était reçu lorsqu'une tonalité de fréquence pure était reçue dans la bande passante de chacun des filtres 12 et 14 et que chacune de ces fréquences pures avait une valeur donnée. On a vu en outre que la présence d'une fréquence pure était indiquée par une amplitude et une variation de phase constantes ou variant dans des limites prédéterminés, et ce, sur un intervalle de temps suffisamment long (plusieurs fois 2ms). On va voir comment les opérations de détection de tonalité et d'identification du signal multifréquences reçu sont effectuées dans le circuit logique 22.

Soient $\rho_n$ et $\theta_n$ l'amplitude et la phase du signal à l'instant où le $n^{\text{ième}}$ échantillon de signal reçu est à traiter par le circuit logique 22.

On a vu plus haut la relation entre la phase instantanée d'un signal et sa fréquence. Or les fréquences des tonalités sont précises à $\pm 1,8\%$ près, il en sera de même des phases. D'autre part, on a vu aussi que l'on mesurerait des variations de phases.

Pour le groupe de fréquences dites basses (groupe A), les variations de phases instantanées à mesurer sont résumées dans le tableau III.

TABLEAU III

| | |
|---|---|
| $684,5 < f < 709,5$ | $132°,8 < \Delta\theta < 150°,8$ |
| $756,1 < f < 783,9$ | $184°,4 < \Delta\theta < 204°,4$ |
| $836,7 < f < 865,3$ | $242°,4 < \Delta\theta < 264°,4$ |
| $924 \quad < f < 957,9$ | $305°,2 < \Delta\theta < 329°,6$ |

Pour le groupe de fréquences dites hautes (groupe B), les variations de phases instantanées sont résumées dans le tableau IV.

TABLEAU IV

| | |
|---|---|
| $1187,2 < f < 1230,8$ | $134°,8 < \Delta\theta < 166°,1$ |
| $1312 \quad < f < 1360$ | $224°,6 < \Delta\theta < 259°,2$ |
| $1450,4 < f < 1503,6$ | $-35°,7 < \Delta\theta < \quad 2°,6$ |
| $1603,6 < f < 1662,4$ | $74°,6 < \Delta\theta < 116°,9$ |

6

Lorsqu'un signal multifréquences est reçu, il contient deux signaux l'un $S_A$ de fréquence $f_A$, l'autre $S_B$ de fréquence $f_B$, qui échantillonnés à la cadence $1/T=500$ Hz s'écrivent:

$$S_A(nT)=\rho_A \ exp \ j \ (2\pi f_A nT+\psi_A)+bruit,$$

$$S_B(nT)=\rho_B \ exp \ j \ (2\pi f_B nT+\psi_B)+bruit,$$

où $T=2ms$.

Les fréquences $f_A$ et $f_B$ seront déterminées par des mesures différentielles permettant de neutraliser les effets dûs aux bruits et aux phases à l'origine. En pratique cela revient à calculer les valeurs:

$$q_A=S_A(nT) \ S_A^*[(n-m)T]=\rho_A^2 \ exp \ j \ \Delta\theta_A+termes \ de \ bruit \qquad (9)$$

et

$$q_B=S_B(nT) \ S_B^*[(n-p)T]=\rho_B^2 \ exp \ j \ \Delta\theta_B+termes \ de \ bruit \qquad (10)$$

dans lesquels:

$$\Delta\theta_A \doteq 2\pi f_A mt \qquad (11)$$

$$\Delta\theta_B=2\pi f_B pt \qquad (12)$$

où: $m$ et $p$ sont tels que, $\tau_A=mT$ et $\tau_B=pT$ représentent les écarts dans le temps entre les mesures opérées sur les signaux reçus et filtrés. En pratique, ayant choisi d'échantillonner à 500 Hz, on pourra prendre $m=p=1$.

le terme * désigne une quantité complexe conjuguée.

Pour chaque groupe de fréquences, ou autrement dit en traitant les informations fournies par chacun des dispositifs 18 et 20, le dispositif logique 22 mesure les valeurs moyennes:

$$<\rho_n>=\frac{1}{8} \ \sum_{i=o}^{7} \ \rho_{n-i} \qquad (13)$$

$$<\Delta\theta_n>=\frac{1}{8} \ \sum_{i=o}^{7} \ \Delta\theta_{n-i} \qquad (14)$$

Le circuit logique 22 détermine aussi les variations d'amplitude et de phase en réalisant les opérations suivantes:

$$\sum_{i=o}^{7} \ (\rho_{n-i}-<\rho_n>)^2 \qquad (15)$$

et

$$\sum_{i=o}^{7} \ (\Delta\theta_{n-i}-<\Delta\theta_n>)^2 \qquad (16)$$

Lorsque $\rho_n$ et $\Delta\theta_n$ sont sensiblement constants, c'est-à-dire

$$\sum \ (\rho_{n-i}-<\rho_n>)^2 \leq K$$

et

$$\sum \ (\Delta\theta_{n-i}-<\Delta\theta_n>)^2 \leq K'$$

où $K$ et $K'$ sont des valeurs limites données, le circuit logique 22 contient des moyens de décision comparant $<\Delta\theta n>$, aux valeurs de variations de phases indiquées sur un des tableaux III ou IV selon que les coordonnées polaires traitées proviendront du dispositif 18 ou du dispositif 20, pour déterminer la fréquence correspondant au signal reçu et filtré par le filtre 12 ou 14 correspondant.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

# 0 097 754

**Revendications**

1. Récepteur de tonalité destiné à détecter la réception d'un signal de fréquence pure dit tonalité et d'identifier ladite fréquence au sein d'un groupe de fréquences prédéterminées, ledit récepteur comprenant des moyens d'échantillonnage et de conversion en numérique du signal reçu; un filtre passe-bande relié aux moyens d'échantillonnage et de conversion en numérique, délivrant les composantes du signal reçu, en coordonnées cartésiennes; des moyens de conversions du signal des coordonnées cartésiennes en coordonnées polaires (ρ, θ) ledit récepteur étant caractérisé en ce que ledit filtre passe bande a une bande passante englobant le spectre dudit groupe de fréquences; et en ce que les informations en coordonnées polaires sont soumises à des moyens logiques d'analyse des informations (ρ, θ) aux fins d'identification de la fréquence reçue lorsqu'elle appartient audit groupe de fréquences prédéterminées.

2. Récepteur de tonalité selon la revendication 1 caractérisé en ce que les moyens de conversion de coordonnées cartésiennes en coordonnées polaires comportent:

des premiers moyens de rotation recevant les coordonnées cartésiennes du signal filtré et tendant à ramener le vecteur correspondant à l'échantillon de signal filtré de coordonnées cartésiennes (x, y) dans le premier quadrant du cercle trigonométrique, et notant l'amplitude de ladite première rotation;

des seconds moyens de rotations successives tendant à faire converger le vecteur ramené dans le premier quadrant dans la position du vecteur de phase π/4 du cercle trigonomètrique et mesurant l'amplitude dudit vecteur à π/4 tout en notant les rotations de phases successives; et

des moyens de calcul déduisant les coordonnées polaires recherchées des informations de rotations de phases effectuées et d'amplitude du vecteur à π/4.

3. Récepteur de tonalité selon la revendication 2 caractérisé en ce que lesdits moyens d'analyse des informations de phase θ et d'amplitude ρ ou coordonnées polaires du signal filtré comportent:

des moyens d'emmagasinage emmagasinant des valeurs prédéterminées de variations de phases;

des premiers moyens de mesure reliés aux moyens de conversion en coordonnées polaires mesurant les variations d'amplitudes ρ entre des instants régulièrement espacés;

des seconds moyens de mesure reliés aux moyens de conversion en coordonnées polaires et mesurant les variations de phase entre deux instants régulièrement espacés;

des premiers moyens d'analyse reliés auxdits premiers moyens de mesure et analysant lesdites variations d'amplitudes de manière à indiquer la réception d'une fréquence pure lorsque lesdites variations d'amplitude restent dans des limites prédéterminées sur un nombre prédéterminé de mesures de variations d'amplitudes successives;

des seconds moyens d'analyse et de décision reliés aux moyens d'emmagasinage et auxdits seconds moyens de mesure et indiquant la coïncidence dans des limites prédéterminées de la variation de phase mesurée avec l'une des valeurs emmagasinées pour identifier le signal reçu.

4. Récepteur de tonalité selon la revendication 3 caractérisé en ce que lesdits moyens de mesure de variation de phase comportent des moyens déterminant la valeur moyenne de ladite variation de phase sur un intervalle de temps prédéterminé et fournit ladite valeur moyenne aux moyens de décision identifiant le signal reçu.

5. Récepteur multifréquences (MFR) chargé de détecter la réception d'un signal composé d'un couple de tonalités pures, l'une appartenant à un premier groupe dit de hautes fréquences, l'autre appartenant à un second groupe dit de basses fréquences, ledit récepteur MFR comportant:

un premier récepteur de tonalités ayant une bande passante couvrant la gramme du groupe de de hautes fréquences, ledit récepteur étant réalisé selon l'une des revendications 1 à 4;

un second récepteur de tonalités ayant une bande passante couvrant la gamme du groupe dit de basses fréquences, ledit récepteur étant réalisé selon l'une des revendications 1 à 4;

des moyens pour appliquer le signal reçu auxdits premier et second récepteurs de tonalité;

des moyens où sont emmagasinées des valeurs de variations de phases correspondant aux fréquences appartenant à chaque couple de tonalités définissant un signal multifréquences; et,

des moyens de décision reliés aux moyens d'emmagasinage, et auxdits premier et second récepteurs de tonalités, lesdits moyens de décision signalant la coïncidence dans des limites prédéterminées entre un couple de tonalités reçu et un couple de tonalités indiqués par les moyens d'emmagasinage.

**Patentansprüche**

1. Tonalitätsempfänger, dessen Aufgabe es ist, den Empfang eines reinen Frequenzsignals, Tonalität genannt, festzustellen und diese Frequenz innerhalb einer Gruppe von vorbestimmten Frequenzen zu identifizieren, wobei dieser Empfänger Mittel aufweist, um das emfangene Signal zu mustern und es in ein Digitalsignal umzuwandeln sowie auch einen Bandpassfilter, der mit den Muster- und Digitalumwandlungsmitteln verbunden ist und die Komponenten des empfangenen Signals in Kartesischen Koordinaten erstellt; Mittel, um die Kartesischen Koordinaten des Signals in polare Koordinaten (ρ, θ) umzuwandeln, und der genannte Empfänger weiterhin dadurch gekennzeichnet ist, dass der genannte Bandpassfilter einen Durchlassbereich aufweist, der das Frequenzspektrum der genannten Frequenzgruppe einschliesst, und dass die Informationen in polaren Koordinaten logischen

8

Analysiermitteln (ρ, θ) vorgelegt werden, damit die empfangene Frequenz identifiziert werden kann, wenn sie zu der vorbestimmten Frequenzgruppe gehört.

2. Tonalitätsempfänger gemäss Anspruch 1, dadurch gekennzeichnet, dass die Umwandlungsmittel der Kartesischen in polare Koordinaten umfassen:

erste Rotationsmittel, die die Kartesischen Koordinaten des gefilterten Signals aufnehmen und versuchen, den dem Muster des gefilterten Signals in Kartesischen Koordinaten (x, y) entsprechenden Vektor in den ersten Quadranten des trigonometrischen Kreises zu bringen, wobei sie die Amplitude der genannten ersten Rotation vermerken;

zweite, wiederholt wirkende Rotationsmittel, die dazu neigeen, den in den ersten Quadranten gebrachten Vektor mit der Position des π/4-Phasen vektors des trigonometrischen Kreises in Übereinstimmung zu bringen und die die Amplitude des Vektors bei π/4 messen während sie die aufeinanderfolgenden Phasendrehungen vermerken; und

Rechenmittel, die aus den Rotationsinformationen der vergangenen Phasen und der Amplitude des Vektors bei π/4 die gesuchten polaren Koordinaten ableiten.

3. Tonalitätsempfänger gemäss Anspruch 2, dadurch gekennzeichnet, dass die genannten Analysiermittel der Informationen zur Phase θ und zur Amplitude ρ oder der polaren Koordinaten des filtrierten Signals umfassen:

Speichermittel zum Einlesen der vorbestimmten Werte der Phasenvariationen;

erste Messmittel, mit den Umwandlungsmitteln in polare Koordinaten verbunden, um die Amplitudenvariationen ρ zwischen zwei regelmässig auseinanderliegenden Zeitpunkten zu messen;

zweite Messmittel, mit den Umwandlungsmitteln in polare Koordinaten verbunden, um die Phasenvariation zwischen zwei regelmässig auseinanderliegenden Zeitpunkten zu messen;

erste Analysiermittel, mit den genannten ersten Messmitteln verbunden, um die genannten Amplitudenvariationen zu analysieren mit dem Ziel, den Empfang einer reinen Frequenz zu melden, wenn die genannten Amplitudenvariationen während einer bestimmten Anzahl von aufeinanderfolgenden Messungen dieser Amplitudenvariationen innerhalb von gewissen, vorbestimmten Grenzen bleiben;

zweite Analysier- und Entscheidungsmittel, mit dem Speichermitteln und den genannten zweiten Messmitteln verbunden, zum Anzeigen der Übereinstimmung, innerhalb von vorbestimmten Grenzen, der gemessenen Phasenvariation mit einem der gespeicherten Werte, zur Identifizierung des empfangenen Signals.

4. Tonalitätsempfänger gemäss Anspruch 3, dadurch gekennzeichnet, dass die genannten Messmittel der Phasenvariation Mittel aufweisen, um den Mittelwert der genannten Phasenvariation über einen vorbestimmten Zeitabstand zu bestimmen und diesen Mittelwert den Entscheidungsmitteln zu übertragen, die das empfangene Signal identifizieren.

5. Mehrfrequenzempfänger (MFR), um den Empfang eines Signals zu entdecken, das aus zwei reinen Tonalitäten besteht, wobei die eine Tonalität einer ersten Gruppe, Hochfrequenzgruppe genannt, angehört und die andere Tonalität einer zweiten Gruppe, Niederfrequenzgruppe genannt, während der genannte MFR-Empfänger folgendes aufweist:

einen ersten Tonalitätsempfänger mit einem Durchlassbereich, der den Frequenzbereich der sogenannten Hochfrequenzgruppe überdeckt, wobei dieser Empfänger nach einem der ansprüche 1 bis 4 ausgelegt ist;

einen zweiten Tonalitätsempfänger mit einem Durchlassbereich, der den Frequenzbereich der sogenannten Niederfrequenzgruppe überdeckt, wobei dieser Empfänger nach einem der Ansprüche 1 bis 4 ausgelegt ist;

Mittel, um das empfangene Signal dem ersten und dem zweiten der genannten Tonalitätsempfänger zu übermitteln;

Mittel, in denen die Phasenvariationswerte gespeichert sind, die den jedem Tonalitätspaar eigenen Frequenzen entsprechen und die ein Mehrfrequenzsignal definieren, und

Entscheidungsmittel, mit den Speichermitteln sowie mit dem ersten und dem zweiten Tonalitätsempfänger verbunden, wobei die genannten Entscheidungsmittel die Übereinstimmung der vorbestimmten Grenzen zwischen einem empfangenen Tonalitätspaar und einem von den Speichermitteln angezeigten Tonalitätspaar melden.

**Claims**

1. A tone detector for detecting a pure frequency signal called tone and for identifying said frequency in a group of predetermined frequencies, including means for sampling and digitally converting the received signal; a bandpass filter connected to said sampling and digital conversion means and providing the Cartesian coordinates of the received signal; and means for converting said Cartesian coordinates into polar coordinates (ρ, θ), said detector being characterized in that said filter has a passband that encompasses the spectrum of said group of frequencies, and in that the information representing said polar coordinates (ρ, θ) is analyzed by logical analysis means to identify the received frequency if it belongs to said group of predetermined frequencies.

2. A tone detector according to claim 1, characterized in that said means for converting Cartesian coordinates into polar coordinates comprise:

9

first rotation means responsive to the Cartesian coordinates of the filtered signal to rotate the vector corresponding to the sample of the filtered signal of Cartesian coordinates (x, y) to move it into the first quadrant of the trigonometric circle, and to record the amplitude of the first rotation;

second successive rotation means for rotating the vector moved into said first quadrant and tracking the $\pi/4$ trigonometric position, and for measuring the amplitude of said $\pi/4$ position while recording the successive phase rotations; and

computing means for deriving the desired polar coordinates from information relating to the phase rotations performed and to the amplitude of the $\pi/4$ vector.

3. A tone detector according to claim 2, characterized in that said means for analyzing the phase $\theta$ and amplitude $\rho$, or polar coordinates, of the filtered signal comprises:

storage means for storing predetermined phase variation values;

first measurement means connected to said Cartesian-to-polar coordinates conversion meams for measuring variations of the amplitude $\rho$ between regularly spaced instants;

second measurement means connected to said Cartesian-to-polar coordinates conversion means, for measuring phase variations between two regularly spaced instants;

first analysis means connected to said first measurement means for analyzing said amplitude variations so as to indicate that a pure frequency has been received whenever said amplitude variations remain within predetermined limits over a predetermined number of successive measurements;

second analysis and decision means connected to said storage means and said second measurement means for indicating that the measured phase variation coincides within predetermined limits with one of the stored values so as to identify the received signal.

4. A tone detector according to claim 3, characterized in that said means for measuring phase variations includes means for determining the mean value of said phase variation within a predetermined time interval and for supplying said mean value to said decision means identifying said received signal.

5. A multifrequency receiver (MFR) for detecting a signal consisting of a couple of pure tones pertaining to a first group of frequencies termed high-frequency group and to a second group of frequencies termed low-frequency group, respectively, said MFR comprising:

a first tone detector whose passband encompasses the range of frequencies of said high-frequency group, said detector being in accordance with any one of claims 1 to 4;

a second tone detector whose passband encompasses the range of frequencies of said low-frequency group, said detector being in accordance with any one of claims 1 to 4;

means for applying the received signal to said first and second tone detectors;

means storing phase variation values corresponding to the frequencies pertaining to each couple of tones defining a multifrequency signal; and

decision means connected to the storage means and to said first and second tone detectors to provide an indication that a received couple of tones coincide within predetermined limits with a couple of tones indicated by said storage means.

0 097 754

# FIG. 1

# FIG.2

# FIG. 3

$$x = \rho_0 \cos \Theta_0$$
$$y = \rho_0 \sin \Theta_0$$

$(x, y)$

$x > 0$ — OUI / NON

OUI / NON — $y > 0$ (gauche)

OUI / NON — $y > 0$ (droite)

$\varphi = 0$
$x' = x$
$y' = y$

$\varphi = 3\pi/2$
$x' = -y$
$y' = x$

$\varphi = \pi/2$
$x' = y$
$y' = -x$

$\varphi = \pi$
$x' = -x$
$y' = -y$

$N = 2$

$\psi = \pi/2^{N+1}$

$y' > x'$ — OUI / NON

$\varphi \leftarrow \varphi + \pi/2_N$

$X = x'\cos\psi + y'\sin\psi$
$Y = y'\cos\psi - x'\sin\psi$

$X = x'\cos\psi - y'\sin\psi$
$Y = y'\cos\psi + x'\sin\psi$

$N = N + 1$
$x' = X$
$y' = Y$

$N \leq 6$ — OUI / NON

$X = Y = \rho_0 \dfrac{\sqrt{2}}{2}$

$\Theta = \Theta_0 \pm \pi/128$

3